# EUROPEAN PATENT APPLICATION

(11) **EP 4 835 018 A1**
(43) Date of publication of application: **04.11.2026**
(21) Application number: 26164028.8
(22) Date of filing: 11.03.2026
(51) Int. Cl.: C09D 11/322, C09D 11/106, C09D 11/324

(54) **INKJET INK AND METHOD OF PRODUCING THE SAME**

(30) Priority: 07.04.2025 JP 2025063251
(71) Applicant: KYOCERA Document Solutions Inc., Osaka-shi, Osaka 540-8585 (JP)
(72) Inventor: WASHINO, Yusuke, Osaka-shi, Osaka, 540-8585 (JP); KOYAMA, Akinori, Osaka-shi, Osaka, 540-8585 (JP); IKETAKI, Kai, Osaka-shi, Osaka, 540-8585 (JP); HIDAKA, Tsubasa, Osaka-shi, Osaka, 540-8585 (JP)
(74) Representative: Viering, Jentschura & Partner mbB Patent- und Rechtsanwälte

(57) **Abstract**

An inkjet ink includes: an aqueous medium; and a pigment dispersion dispersed in the aqueous medium. The pigment dispersion includes a pigment and a specific resin. The specific resin includes a styrene derivative and a (meth)acrylic acid derivative and has a cross-linked structure in which a pigment dispersion resin having an acid value of 71 mg KOH/g or more and 449 mg KOH/g or less is cross-linked by a cross-linking agent formed of a multifunctional epoxy resin. A mass ratio of the specific resin to the pigment in the pigment dispersion is 0.2 or more and 0.5 or less. The cross-linking agent has a Log P of 0.5 or more and 2 or less.

## Description

### Field

The present disclosure relates to an inkjet ink and a method of producing the same.

### Background

An inkjet ink in which a pigment dispersion resin is cross-linked on the surface of a pigment has been known. In such an inkjet ink, the separation of the pigment dispersion resin from the surface of the pigment is suppressed, thereby preventing deterioration of dispersion stability and redispersibility of the pigment and making an increase in viscosity caused by agglomeration of the pigment dispersion resin peeled off from the surface of the pigment less likely to occur.

### Summary

An inkjet ink according to an embodiment of the present disclosure includes: an aqueous medium; and a pigment dispersion dispersed in the aqueous medium.

The pigment dispersion includes a pigment and a specific resin.

The specific resin includes a styrene derivative and a (meth)acrylic acid derivative and has a cross-linked structure in which a pigment dispersion resin having an acid value of 71 mg KOH/g or more and 449 mg KOH/g or less is cross-linked by a cross-linking agent formed of a multifunctional epoxy resin.

A mass ratio of the specific resin to the pigment in the pigment dispersion is 0.2 or more and 0.5 or less.

The cross-linking agent has a Log P of 0.5 or more and 2 or less.

A method of producing an inkjet ink according to an embodiment of the present disclosure includes: a cross-linking step of obtaining a specific resin by subjecting a pigment dispersion liquid including a cross-linking agent and a pigment dispersion that includes a pigment and a pigment dispersion resin adsorbed on a surface of the pigment to cross-linking treatment to cross-link the pigment dispersion resin adsorbed on the surface of the pigment.

The pigment dispersion resin includes a styrene derivative and a (meth)acrylic acid derivative.

The pigment dispersion resin has an acid value of 71 mg KOH/g or more and 449 mg KOH/g or less.

The cross-linking agent is formed of a multifunctional epoxy resin.

A mass ratio of the specific resin to the pigment in the pigment dispersion is 0.2 or more and 0.5 or less.

The cross-linking agent has a Log P of 0.5 or more and 2 or less.

According to the present disclosure, it is possible to improve the dispersibility of pigments while suppressing the increase in viscosity.

### Detailed Description

In the inkjet ink described in the above Background, a hydrophilic cross-linking agent is used to cross-link the pigment dispersion resin. For this reason, in this inkjet ink, the pigment dispersion resin that has released from the surface of the pigment is cross-linked by the hydrophilic cross-linking agent, thereby making an increase in viscosity likely to occur.

In view of the circumstances as described above, it is an object of the present disclosure to improve the dispersibility of pigments while suppressing the increase in viscosity.

An embodiment of the present disclosure will be described. Note that in the present disclosure, "acrylic" and "methacrylic" will be collectively referred to as "(meth)acrylic", i.e., "(meth)acrylic" includes both "acrylic" and "methacrylic".

### [Configuration of inkjet ink]

### (Schematic configuration)

An inkjet ink according to an embodiment of the present disclosure (hereinafter, also referred to simply as an "ink") includes an aqueous medium and a pigment dispersion dispersed in the aqueous medium. The pigment dispersion includes a pigment a and a specific resin coating the pigment a. The ink according to this embodiment is a water-based ink that is ejected onto a recording medium from a recording head of an inkjet recording apparatus to form an image on the recording medium.

Examples of the recording medium on which an image is formed with the ink according to this embodiment include a permeable recording medium and a non-permeable recording medium. The ink according to this embodiment is suitable for forming an image on a permeable recording medium having excellent permeability of inks. Examples of the permeable recording medium include printing paper and a medium using a fiber as a raw material (e.g., a fabric). Examples of the printing paper include plain paper, copy paper, recycled paper, thin paper, thick paper, and glossy paper.

In the ink according to this embodiment, the specific resin has a cross-linked structure in which a pigment dispersion resin b having the effect of suppressing agglomeration of pigments in the aqueous medium by being adsorbed on the surface of the pigment a is cross-linked by a cross-linking agent c. In the ink according to this embodiment, since the specific resin coating the pigment a has a cross-linked structure, the specific resin is bound to the surface of the pigment a, thereby preventing the specific resin from separating from the surface of the pigment a. In the ink according to this embodiment, a strong binding force of the specific resin to the surface of the pigment a can be achieved while maintaining the effect of suppressing the agglomeration of the pigments a by the pigment dispersion resin b, making it easier to maintain the dispersibility of the pigment dispersion. For this reason, in the ink according to this embodiment, high redispersibility of the pigment dispersion can be achieved. In the ink according to this embodiment, the pigment dispersion resin b is a copolymer that includes a styrene derivative and a (meth)acrylic acid derivative. Further, in the ink according to this embodiment, the cross-linking agent c is formed of a hydrophobic multifunctional epoxy resin.

### (Pigment a)

In the ink according to this embodiment, for example, a yellow pigment, an orange pigment, a red pigment, a blue pigment, a purple pigment, or a black pigment can be used as the pigment a. Examples of the yellow pigment include C.I. Pigment Yellow 74, 93, 95, 109, 110, 120, 128, 138, 139, 151, 154, 155, 173, 180, 185, or 193. Examples of the orange pigment include C.I. Pigment Orange 34, 36, 43, 61, 63, or 71. Examples of the red pigment include C.I. Pigment Red 122 or 202. Examples of the blue pigment include C.I. Pigment Blue 15 or 15:3. Examples of the purple pigment include C.I. Pigment Violet 19, 23, or 33. Examples of the black pigment include C.I. Pigment Black 7. In the ink according to this embodiment, the content of the pigment a is favorably 3 mass% or more and 20 mass% or less.

### (Pigment dispersion)

In the ink according to this embodiment, the pigment dispersion resin b is a fine particle of a copolymer that includes a styrene derivative and a (meth)acrylic acid derivative, and has the effect of suppressing the agglomeration of the pigments a by being adsorbed on the surface of the pigment a. Part of the pigment dispersion resin b may be free and dispersed in the aqueous medium without being adsorbed on the surface of the pigment a. The styrene derivative constituting the pigment dispersion resin b includes styrene, α-methylstyrene, β-methylstyrene, or the like. The (meth)acrylic acid derivative constituting the pigment dispersion resin b includes acrylic acid, methacrylic acid, or the like. The carboxy group of the (meth)acrylic acid derivative constituting the pigment dispersion resin b may be neutralized by a basic compound.

Examples of the basic compound used to neutralize the carboxy group of the (meth)acrylic acid derivative constituting the pigment dispersion resin b include an organic base and an inorganic base. Examples of the organic base include amines, pyridines, and imidazoles. Examples of the inorganic base include sodium hydroxide (NaOH) and potassium hydroxide (KOH). From the viewpoint of cost, it is advantageous to use an inorganic base as a basic compound. Meanwhile, using an inorganic base as a basic compound tends to increase a pH after cross-linking treatment, making it difficult to increase the cross-linking strength and making it necessary to perform neutralization treatment after the cross-linking treatment. From such a viewpoint, it is favorable to use an organic base as a basic compound, and it is more favorable to use only an organic base.

The neutralization rate of the pigment dispersion resin b is favorably 20% or more and 100% or less. Note that the neutralization rate of the pigment dispersion resin b is obtained as the percentage (100 × (MB / MA)) of a usage amount MB to a theoretical value MA, MA indicating the theoretical value of the amount of the basic compound necessary for completely neutralizing the pigment dispersion resin b, MB indicating the actual usage amount of the basic compound in the dispersion step.

The acid value of the pigment dispersion resin b is 71 mg KOH/g or more and 449 mg KOH/g or less, favorably less than 200 mg KOH/g. By setting the acid value of the pigment dispersion resin b to 71 mg KOH/g or more, favorable cross-linking by the cross-linking agent c is possible. By setting the acid value of the pigment dispersion resin b to 449 mg KOH/g or less, high redispersibility of pigments can be achieved in the ink according to this embodiment. Note that the acid value of the pigment dispersion resin b is obtained by measurement according to JIS K 0070:1992 (Test methods for acid value, saponification value, ester value, iodine value, hydroxyl value and unsaponifiable matter of chemical products).

In the ink according to this embodiment, as described above, a specific resin having a cross-linked structure in which the pigment dispersion resin b is cross-linked by the cross-linking agent c is formed, i.e., the pigment dispersion includes the pigment a and the specific resin. The specific resin has a structure derived from the pigment dispersion resin b and a structure derived from the cross-linking agent c. In the ink according to this embodiment, the cross-linking rate of the specific resin is favorably 30% or more and 60% or less. In the ink according to this embodiment, by keeping the cross-linking rate of the specific resin at 60% or less, higher redispersibility of the pigment dispersion is more likely to be achieved. Further, in the ink according to this embodiment, by setting the cross-linking rate of the specific resin to 30% or more, the effect of suppressing separation of the specific resin form the surface of the pigment a is more likely to be achieved more favorably.

The cross-linking rate refers to the percentage of the number of moles of repeating units having a cross-linked structure when the total number of moles of repeating units derived from the monomer having a functional group that reacts with the cross-linking agent in the specific resin is 100%. The cross-linking rate of the specific resin according to this embodiment is defined by an apparent cross-linking rate calculated from the equivalent number of moles of carboxy groups of the specific resin and the equivalent number of moles of cross-linked functional groups of the cross-linking agent and is calculated using the following formula. 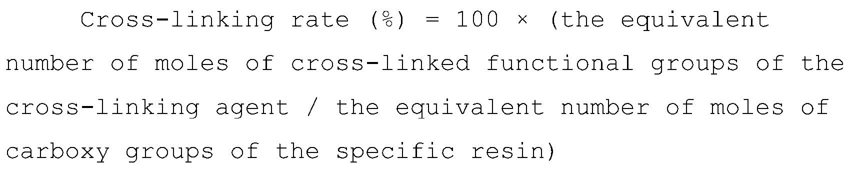 Cross-linking rate (%) = 100 × (the equivalent number of moles of cross-linked functional groups of the cross-linking agent / the equivalent number of moles of carboxy groups of the specific resin)

In this embodiment, the cross-linking agent c used for cross-linking the pigment dispersion resin b is a multifunctional epoxy resin having an epoxy group that reacts with the carboxy group of the pigment dispersion resin b. In the ink according to this embodiment, the cross-linking agent c is hydrophobic. Specifically, the cross-linking agent c has an octanol/water partition coefficient Log P (hereinafter, also referred to simply as a Log P) of 0.5 or more and 2 or less, favorably 1 or less. This promotes adsorption of the pigment dispersion resin b onto the surface of the pigment a in the dispersion step and makes the pigment dispersion resin b that is free in the aqueous medium without being adsorbed on the surface of the pigment a less likely to undergo a cross-linking reaction with the hydrophobic cross-linking agent c in the cross-linking step. As a result, in the ink according to this embodiment, it is possible to make an increase in viscosity associated with cross-linking treatment less likely to occur.

There are two methods for obtaining a Log P, i.e., a method involving calculation based on a molecular structure (estimation) and an experimental method involving actual measurement. In this embodiment, the calculation method proposed by Crippen was employed. Specifically, the Log P calculation method (JCICS 39, 868-873, 1999) published by S. A. Wildman and G. M. Crippen in 1999 was used. For this calculation, the rdkit.Chem.Crippen.MolLogP module of the chemoinformatics library RDKit was used.

The cross-linking agent c favorably has two or more epoxy groups in one molecule. Further, the cross-linking agent c favorably as a structure having no hydroxyl group in order to enhance the adsorption onto the surface of the pigment a. Note that the water solubility is calculated from the amount of the epoxy compound dissolved when 10 g of an epoxy compound was added to 90 g of water. In the ink according to this embodiment, neopentyl glycoldiglycidylether, 1,6-hexanediol diglycidylether, or the like can be used as the cross-linking agent c.

In the ink according to this embodiment, in order to achieve both low viscosity and high dispersibility of the pigment a, the mass ratio of the specific resin to the pigment a in the pigment dispersion is 0.2 or more and 0.5 or less. Further, in the ink according to this embodiment, the content of the pigment dispersion is favorably 5 mass% or more and 30 mass% or less. In the ink according to this embodiment, by setting the content of the pigment dispersion to 5 mass% or more, an image with favorable image density is more likely to be formed on a recording medium. Further, in the ink according to this embodiment, by keeping the content of the pigment dispersion at 30 mass% or less, fluidity sufficient as an ink is more likely to be ensured. Further, in the ink according to this embodiment, the content of the specific resin is favorably 0.5 mass% or more and 10 mass% or less. In addition, in the pigment dispersion, the total content of the pigment a and the specific resin is favorably 90 mass% or more.

### (Water)

In the ink according to this embodiment, for example, ion exchanged water, purified water, or distilled water can be used as water constituting the aqueous medium. In the ink according to this embodiment, the content of water is favorably 25 mass% or more and 80 mass% or less from the viewpoints of dryness and ejection reliability.

### (Other components)

In the ink according to this embodiment, components other than the above may be blended as necessary. The surfactant is capable of optimizing the permeability (wettability) of the ink according to the present disclosure on a recording medium. Examples of the surfactant that can be used in the ink according to this embodiment include an anionic surfactant, a cationic surfactant, and a nonionic surfactant. As the surfactant, a nonionic surfactant is favorable. Examples of the nonionic surfactant include polyoxyethylene dodecylether, polyoxyethylene hexadecylether, polyoxyethylene nonylphenylether, polyoxyethylene sorbitan monooleate ether, monodecanoyl sucrose, and an ethylene oxide adduct of acetylene glycol. As the nonionic surfactant, an ethylene oxide adduct of acetylene glycol is favorable.

Further, in addition to the surfactant, various additives such as a dispersing aid, a dissolution stabilizer, an antioxidant, a viscosity adjustor, a pH adjuster, and an antifungal agent may be added to the ink according to this embodiment, as necessary.

### [Method of producing inkjet ink]

### (Introduction)

An example of the method of producing the ink according to this embodiment will be described. The method of producing the ink according to this embodiment includes a dispersion step, a cross-linking step, a centrifuging step, and an ink preparation step. Note that in the method of producing the ink according to this embodiment, the centrifuging step may be omitted. Each step of the method of producing the ink according to this embodiment will be described below.

### (Dispersion step)

In the dispersion step, a pigment dispersion liquid in the preceding stage of cross-linking the pigment dispersion resin b is prepared by performing dispersion treatment for dispersing the pigment a, the pigment dispersion resin b, and a cross-linking agent in water. In the pigment dispersion liquid at this stage, the pigment dispersion including the pigment a and the pigment dispersion resin b adsorbed on the surface of the pigment a is dispersed in water. Examples of the dispersing apparatus to be used for dispersion include a wet dispersing apparatus such as a media disperser. It is favorable to subject the pigment dispersion resin b to be used in the dispersion step to neutralization treatment with a basic compound (e.g., KOH or NaOH) in advance such that a predetermined neutralization rate is achieved. In the dispersion step, an antifoaming agent may be blended in the pigment dispersion liquid. In the dispersion step, it is favorable to remove coarse particles from the pigment dispersion liquid by filtration using a filter (e.g., a pore size of 5 µm).

### (Cross-linking step)

In the cross-linking step, the pigment dispersion liquid obtained in the dispersion step is subjected to cross-linking treatment. This causes the carboxy group of the pigment dispersion resin b adsorbed on the surface of the pigment a and the epoxy group of the cross-linking agent c to react with each other, thereby cross-linking the pigment dispersion resin b on the surface of the pigment a. At this time, the hydrophobic cross-linking agent c is less likely to undergo a cross-linking reaction with the pigment dispersion resin b that is free in the aqueous medium without being adsorbed on the surface of the pigment a. In the cross-linking step, it is favorable to stir the pigment dispersion liquid while heating it. The conditions (temperature, time, etc.) of the cross-linking treatment can be set in accordance with the target cross-linking rate of the specific resin after cross-linking of the pigment dispersion resin b, and the like. The heating temperature can be, for example, 50°C or more and 95°C or less. The heating time can be, for example, 30 minutes or more and 8 hours or less.

### (Centrifuging step)

In the centrifuging step, the pigment dispersion liquid after the cross-linking step is subjected to centrifugal treatment, and the supernatant liquid of the pigment dispersion liquid after the centrifugal treatment is replaced with water. As a result, in the centrifuging step, the components that have been free in water in the pigment dispersion liquid can be removed. The centrifugal treatment conditions in the centrifuging step can be, for example, a rotational speed of 10,000 rpm or more and 100,000 rpm or less and a centrifugal treatment time of 12 hours or more and 48 hours or less.

### (Ink preparation step)

In the ink preparation step, water is added to the pigment dispersion liquid after the centrifuging step. In this way, the ink according to this embodiment is obtained. Note that in the ink preparation step, components other than water (specifically, at least one of a surfactant, a dissolution stabilizer, a penetrating agent, a viscosity adjustor, or the like) may be further added, as necessary. In the ink preparation step, it is favorable to stir the obtained ink with a stirrer. Further, in the ink preparation step, foreign substances and coarse particles may be removed from the obtained ink using a filter (e.g., a filter having a pore size of 5 µm or less).

### [Examples and Comparative Examples]

As Examples and Comparative Examples of the present disclosure, inks were prepared and evaluated. Note that the following Examples are merely examples of the present disclosure, and the configuration of the present disclosure is not limited to those in Examples.

### (Preparation of ink)

Inks according to Examples and Comparative Examples were prepared in accordance with the above production method. In all of Examples and Comparative Examples, carbon black "MONARCH 800" manufactured by CABOT was used as a pigment. As pigment dispersion resins, a pigment dispersion resin b1 formed of a styrene-(meth)acrylic acid copolymer having an acid value of 70 mg KOH/g (neutralization rate: 80%), a pigment dispersion resin b2 formed of a styrene-(meth)acrylic acid copolymer having an acid value of 180 mg KOH/g (neutralization rate: 60%), and a pigment dispersion resin b3 formed of a styrene-(meth)acrylic acid copolymer (neutralization rate: 50%) having an acid value of 450 mg KOH/g were prepared.

As cross-linking agents, the following cross-linking agents c1, c2, andc3 were prepared. The cross-linking agent c1 is polyglycerol polyglycidylether having a Log P of 0.04. The cross-linking agent c2 is neopentyl glycoldiglycidylether having a Log P of 0.84. The cross-linking agent c3 is 1,6-hexanediol diglycidylether having a Log P of 1.38.
Cross-linking agent c1: DENACOL(registered trademark) EX-512 (manufactured by Nagase ChemteX Corporation)
Cross-linking agent c2: DENACOL(registered trademark) EX-211 (manufactured by Nagase ChemteX Corporation)
Cross-linking agent c2: DENACOL(registered trademark) EX-212 (manufactured by Nagase ChemteX Corporation)

First, a mixture of 15 mass% of a pigment, 5 mass% of a pigment dispersion resin, 1 mass% of 1,2-pentanediol, and 79 mass% of water was subjected to dispersion treatment using a bead mill ("Rocking shaker RS-05W-CV" manufactured by SEIWA GIKEN Co., ltd.) to obtain a pigment dispersion liquid. 1,2-pentanediol was blended as a dispersing aid. In the dispersion treatment, 180 g of beads were used per 60 g of the mixture. The dispersion treatment was terminated when the particle size of the pigment dispersion reached 85 to 95 nm. In the case where the hydrophobic cross-linking agent c2 or c3 is used, a mixture including the cross-linking agent was prepared, and the cross-linking agent was dispersed together with the other components.

Next, water was added to the pigment dispersion liquid to achieve the solid content concentration of 14.3 mass%. In the case where the hydrophilic cross-linking agent c1 is used, the cross-linking agent was added to the pigment dispersion liquid together with water. The pigment dispersion liquid to which water had been added was stirred while being heated to perform cross-linking treatment. The cross-linking rate of the specific resin was set to be within the range of 30% to 60%.

Then, PEG400, a surfactant, and water were added to the pigment dispersion liquid to obtain an ink. As the surfactant, SURFYNOL 440 (Nissin Chemical Co., Ltd.) was used. In each ink, the content of the pigment was set to 8 mass%, the content of PEG400 was set to 15 mass%, and the content of the surfactant was set to 1 mass%.

### (Evaluation of ink)

### ·Viscosity

In the evaluation of viscosity, an uncross-linked ink that used the same pigment dispersion resin as that of the ink to be evaluated and was subjected to no cross-linking treatment was prepared, and the degree of increase or decrease in viscosity relative to the uncross-linked ink was evaluated for each ink. Viscosity V1 of each ink and viscosity V0 of the uncross-linked ink were measured at 25°C using an E-type viscometer TV-100EL (manufactured by TOKISANGYO). The viscosity V0 of the uncross-linked ink prepared using the pigment dispersion resin b1 was 2.6 mPa·s. The viscosity V0 of the uncross-linked ink prepared using the pigment dispersion resin b2 was 2.8 mPa·s. The viscosity V0 of the uncross-linked ink prepared using the pigment dispersion resin b3 was 4.3 mPa·s. Then, the viscosity increase rate (%) was calculated as 100 × (V1 - V0) / V0. For the viscosity of each ink, the viscosity increase rate was used as an evaluation value, and evaluation was performed in accordance with the following criteria A and B. Inks with the evaluation of A for viscosity are evaluated to "Pass", and inks with the evaluation of B are evaluated to "Fail".
A: 0% or less
B: exceeding 0%

### ·Method of evaluating redispersibility

For the inks according to Examples and Comparative Examples, redispersibility was evaluated. The redispersibility of the ink was evaluated through two tests, i.e., whether or not dispersion is maintained under solvent-rich conditions dispersed (solvent resistance test) and whether or not redispersion occurs after drying (redispersibility test). In the solvent resistance test, 0.1 mL of the pigment dispersion liquid after cross-linking treatment was added dropwise into 4 g of PEG400, the mixture was stirred and then allowed to stand, and whether or not aggregates could be observed one day after was visually evaluated. In the redispersibility test, first, each ink was applied onto a SUS substrate by spin coating and allowed to stand. Four days after the application of each ink, the applied coating film of each ink dried on the SUS substrate was immersed in ion exchanged water for 1 minute, and the behavior of the pigment dispersion when the applied coating film was dissolved was visually observed. The redispersibility of each ink was evaluated in accordance with the following criteria A, B, and C. Inks with the evaluation of A for redispersibility are evaluated to "Pass", and inks with the evaluation of B or C are evaluated to "Fail".
A: no aggregates were observed in the solvent resistance test, and redispersion occurred in the redispersibility test
B: no aggregates were observed in the solvent resistance test, and no redispersion occurred in the redispersibility test
C: aggregates were observed in the solvent resistance test

### (Examples 1 and 2)

Table 1 shows the acid value of the pigment dispersion resin, the Log P of the cross-linking agent, the evaluation result of the viscosity increase rate, and the evaluation result of redispersibility for the inks according to Examples 1 and 2. The inks according to Examples 1 and 2 have the configuration described in the above embodiment. In all of the inks according to Examples 1 and 2, both the viscosity and the redispersibility were evaluated to "Pass".

**(Table 1)**

| | | Dispersion resin | Cross-linking agent | Evaluation result | | | |
|---|---|---|---|---|---|---|---|
| | | Acid value (mg KOH/g) | Log P | Viscosity | | | Redispersibility |
| | | | | Viscosity (mPa·s) | Increase rate (%) | Evaluation | Evaluation |
| Example | 1 | 180 | 0.84 | 2.6 | -7.1 | A | A |
| | 2 | 180 | 1.38 | 2.8 | 0.0 | A | A |

### (Comparative Examples 1 to 5)

Table 2 shows the acid value of the pigment dispersion resin, the Log P of the cross-linking agent, the evaluation result of the viscosity increase rate, and the evaluation result of redispersibility for the inks according to Comparative Examples 1 to 5. The inks according to Comparative Examples 1 and 2 are different from the inks according to Examples 1 and 2 in that the acid value of the pigment dispersion resin is less than 71 mg KOH/g. The inks according to Comparative Examples 3 and 4 are different from the inks according to Examples 1 and 2 in that the acid value of the pigment dispersion resin exceeds 449 mg KOH/g. The ink according to Comparative Example 5 is different from the inks according to Examples 1 and 2 in that the cross-linking agent has a Log P of less than 0.5. In all of the inks according to Comparative Examples 1 to 4 in which the acid value of the pigment dispersion resin was outside the range in the above embodiment, the redispersibility was evaluated to "Fail". Further, in the ink according to Comparative Example 5 in which a hydrophilic cross-linking agent was used, the viscosity was evaluated to "Fail".

**(Table 2)**

| | | Dispersion resin | Cross-linking agent | Evaluation result | | | |
|---|---|---|---|---|---|---|---|
| | | Acid value (mg KOH/g) | Log P | Viscosity | | | Redispersibility |
| | | | | Viscosity (mPa·s) | Increase rate (%) | Evaluation | Evaluation |
| Comparative Example | 1 | 70 | 0.84 | 2.5 | -3.8 | A | C |
| | 2 | 70 | 1.38 | 2.6 | 0.0 | A | C |
| | 3 | 450 | 0.84 | 3.9 | -9.3 | A | B |
| | 4 | 450 | 1.38 | 4.0 | -7.0 | A | B |
| | 5 | 180 | 0.04 | 3.2 | 14.3 | B | A |

## Claims

1. An inkjet ink, comprising:
an aqueous medium; and
a pigment dispersion dispersed in the aqueous medium,
the pigment dispersion including a pigment and a specific resin,
the specific resin including a styrene derivative and a (meth)acrylic acid derivative and having a cross-linked structure in which a pigment dispersion resin having an acid value of 71 mg KOH/g or more and 449 mg KOH/g or less is cross-linked by a cross-linking agent formed of a multifunctional epoxy resin,
a mass ratio of the specific resin to the pigment in the pigment dispersion being 0.2 or more and 0.5 or less,
the cross-linking agent having a Log P of 0.5 or more and 2 or less.

2. The inkjet ink according to claim 1, wherein
the pigment dispersion resin has an acid value of less than 200 mg KOH/g.

3. The inkjet ink according to claim 1, wherein
the cross-linking agent has a Log P of 1 or less.

4. The inkjet ink according to claim 1, wherein
a carboxy group of the pigment dispersion resin is neutralized by an organic base.

5. A method of producing an inkjet ink, comprising:
a cross-linking step of obtaining a specific resin by subjecting a pigment dispersion liquid including a cross-linking agent and a pigment dispersion that includes a pigment and a pigment dispersion resin adsorbed on a surface of the pigment to cross-linking treatment to cross-link the pigment dispersion resin adsorbed on the surface of the pigment,
the pigment dispersion resin including a styrene derivative and a (meth)acrylic acid derivative,
the pigment dispersion resin having an acid value of 71 mg KOH/g or more and 449 mg KOH/g or less,
the cross-linking agent being formed of a multifunctional epoxy resin,
a mass ratio of the specific resin to the pigment in the pigment dispersion being 0.2 or more and 0.5 or less,
the cross-linking agent having a Log P of 0.5 or more and 2 or less.
